# EUROPEAN PATENT APPLICATION

(11) **EP 2 704 479 A1**
(43) Date of publication of application: **05.03.2014**
(21) Application number: 12777191.3
(22) Date of filing: 24.04.2012
(51) Int. Cl.: H04W 24/10, H04W 36/00

(54) **MOBILE COMMUNICATION METHOD, MOBILE MANAGEMENT NODE, AND SUBSCRIBER MANAGEMENT SERVER**

(30) Priority: 28.04.2011 JP 2011102248
(71) Applicant: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); TANAKA, Itsuma, Tokyo 100-6150 (JP)
(74) Representative: HOFFMANN EITLE
(86) International application number: PCT/JP2012/060961
(87) International publication number: WO 2012/147736

(57) **Abstract**

To enable control such that a roaming mobile station UE is not instructed to perform MDT. A mobile communication method according to the present invention includes: a step of determining, by a mobile management node MME, whether a mobile station UE is a roaming mobile station UE (Roaming User), in an Attach procedure of a mobile station UE or a transition procedure to an Active state; and a step of transmitting, by the mobile management node MME, to a radio base station eNB, "User Consent Indication" indicating that the mobile station UE has not given consent for implementation of MDT when it is determined that the mobile station UE is a roaming mobile station UE.

## Description

### [Technical Field]

The present invention relates to a mobile communication method, a mobile management node, and a subscriber management server.

### [Background Art]

In a LTE (Long Term Evolution) scheme, "MDT (Minimization of Drive Tests)" is defined.

In the MDT, "Management Based MDT", which acquires measurement results from a particular mobile station UE in an area to be measured, is defined such that a mobile station UE that performs MDT is selected on the basis of "User Consent Status (consent status)" that indicates whether each mobile station UE gives consent for implementation of MDT.

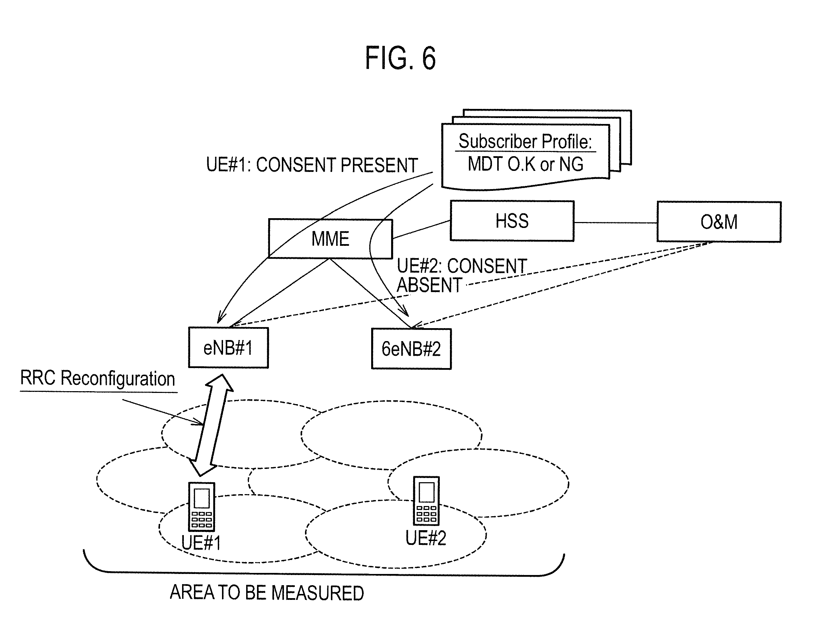

Specifically, it is configured, as illustrated in Fig. 6, such that when "Management Based MDT" is performed, an operation and management server O&M instructs radio base stations eNB#1/eNB#2 that manage cells included in an area to be measured to perform MDT.

It is further configured such that when "Management Based MDT" is performed, a mobile management node MME (Mobility Management Entity) is configured to notify the radio base stations eNB#1/eNB#2 of "User Consent Status" related to each mobile station UE.

Further, when "Management Based MDT" is performed, the radio base stations eNB#1/eNB#2 instruct a mobile station UE#1 that has given consent for implementation of MDT to perform MDT by "RRC Reconfiguration" and does not instruct a mobile station UE#2 that has not given consent for implementation of MDT to perform the MDT.

In addition, according to the LTE scheme, in the "Management Based MDT", it is proposed that "User Consent Status" related to each mobile station UE is to be notified from the mobile management node MME to a radio base station eNB, and that "User Consent Status" related to each mobile station UE is to be notified between radio base stations eNB (see Non Patent Literatures 1 and 2).

### [Citation List]

### [Non Patent Literature]

[NPL 1] 3GPP contribution R3-110933
[NPL 2] 3GPP contribution R3-110934
[NPL 3] 3GPP contribution R3-111136

### [Summary of Invention]

The LTE scheme defines a requirement condition under which MDT measurement results are not to be acquired from a roaming mobile station UE (Roaming User) (see Non Patent Literature 3).

However, in the mobile communication system based on the existing LTE scheme, the radio base station eNB cannot determine whether each mobile station UE is a roaming mobile station UE. Thus, there is a problem in that it is not possible to perform control such that a roaming mobile station UE is not instructed to perform MDT.

In particular, in the mobile communication system based on the existing LTE scheme, there is a problem in that it is not possible to perform control such that a roaming mobile station UE that is newly connected according to an Attach procedure of the mobile station or the transition procedure to an Active state is not instructed to perform MDT.

Therefore, the present invention has been made in view of the above-described problems, and an object of the present invention is to provide a mobile communication method, a mobile management node, and a subscriber management server with which it is possible to control such that a roaming mobile station UE is not instructed to perform MDT.

A first characteristic of the present invention is summarized in that a mobile communication method, comprising: a step of determining, by a mobile management node, whether a mobile station is a roaming mobile station, in an Attach procedure of the mobile station or a transition procedure to an Active state; and a step of transmitting, by the mobile management node, to a radio base station, a consent status indication signal indicating that the mobile station has not given consent for implementation of drive tests when it is determined that the mobile station is a roaming mobile station.

A second characteristic of the present invention is summarized in that a mobile management node, comprising: a determination unit configured to determine, in the Attach procedure of the mobile station or the transition procedure to the Active state, whether the mobile station is a roaming mobile station; and a transmission unit configured to transmit, to the radio base station, a consent status indication signal indicating that the mobile station has not given consent for the implementation of drive tests when the determination unit determines that the mobile station is a roaming mobile station.

A third characteristic of the present invention is summarized in that a mobile communication method, comprising: a step of determining, by a subscriber management server in a home network of the mobile station, in a tracking area update procedure of the mobile station, whether the mobile station is in a roaming state; and a step of transmitting, by the subscriber management server, to a mobile management node to which the mobile station is connected, a consent status indication signal indicating that the mobile station has not given consent for implementation of drive tests when the subscriber management server determines that the mobile station is in a roaming state.

A fourth characteristic of the present invention is summarized in that a subscriber management server in the home network of the mobile station, comprising: a determination unit that determines, in a tracking area update procedure of the mobile station, whether the mobile station is in a roaming state; and a transmission unit that transmits, to a mobile management node to which the mobile station is connected, the consent status indication signal indicating that the mobile station has not given consent for implementation of drive tests when it is determined that the mobile station is in a roaming state.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a mobile management node according to the first embodiment of the present invention.
[Fig. 3] Fig. 3 is a flowchart illustrating an operation of the mobile management node according to the first embodiment of the present invention.
[Fig. 4] Fig. 4 is a functional block diagram of a subscriber management server according to a second embodiment of the present invention.
[Fig. 5] Fig. 5 is a flowchart illustrating an operation of the subscriber management server according to the second embodiment of the present invention.
[Fig. 6] Fig. 6 is a diagram for explaining a conventional mobile communication system.

### [Description of Embodiments]

### (Mobile communication system according to first embodiment of the present invention)

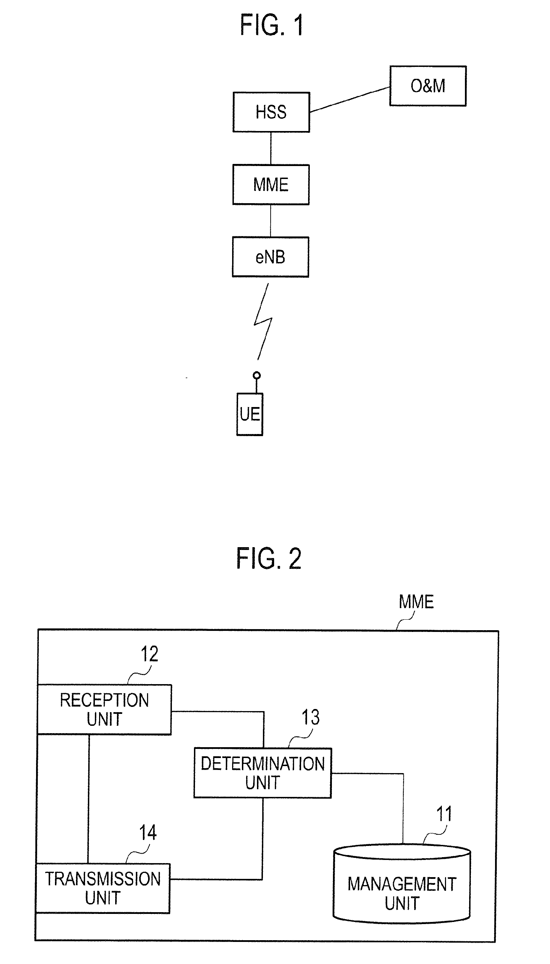

A mobile communication system according to a first embodiment of the present invention will be described with reference to Figs. 1 to 3.

As illustrated in Fig. 1, a mobile communication system according to the present embodiment is the mobile communication system based on an LTE scheme and includes a radio base station eNB, a mobile management node MME, a subscriber management server HSS (Home Subscriber Server), and an operation and maintenance server O&M.

The mobile communication system according to the present embodiment is configured to be capable of performing "Management Based MDT".

The mobile management node MME according to the present embodiment includes a management unit 11, a reception unit 12, a determination unit 13, and a transmission unit 14 as illustrated in Fig. 2.

The management unit 11 is configured to manage "User Consent Status" that indicates whether a non-roaming mobile station UE, that is, a mobile station UE for a user of a network to which the mobile management node MME belongs, has given consent for implementation of MDT.

Here, the management unit 11 may be configured to manage "User Consent Status" that indicates whether each mobile station have given consent for implementation of MDT by acquiring "User Profile" related to each mobile stations UE from the subscriber management server HSS.

The reception unit 12 is configured to receive various signals from the radio base station eNB and the mobile station UE.

For example, the reception unit 12 is configured, in an Attach procedure of the mobile station UE, to receive "Attach Request" from the mobile station UE and receive "Service Request" from the mobile station UE in a transition procedure of the mobile station UE from an Idle mode (Idle state) to a Connected mode (Active state).

The determination unit 13 is configured to determine whether the mobile station UE is a roaming mobile station UE (Roaming User) on the basis of IMSI (International Mobile Subscriber Identity) or the like of the mobile station UE, in the Attach procedure of the mobile station UE or the transition procedure to the Connected mode.

The transmission unit 14 is configured to transmit various signals to the radio base station eNB and the mobile station UE.

Here, the transmission unit 14 is configured to transmit, to the radio base station eNB, "User Consent Indication" indicating that the mobile station UE has not given consent for implementation of MDT, when the determination unit 13 determines that the mobile station UE is a roaming mobile station UE.

On the other hand, the transmission unit 14 is configured to transmit "User Consent Indication" for notifying the radio base station eNB of "User Consent Status" related to the mobile station UE managed by the management unit 11 when the determination unit 13 determines that the mobile station UE is not a roaming mobile station UE.

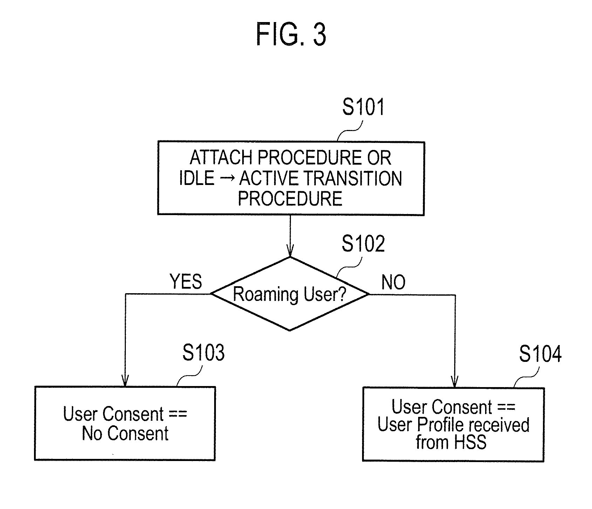

Hereinafter, an example of an operation of the mobile management node MME according to the first embodiment of the present invention will be described with reference to Fig. 3.

As illustrated in Fig. 3, upon receiving "Attach Request" from the mobile station UE in the Attach procedure of the mobile station UE or receiving "Service Request" from the mobile station UE in the transition procedure of the mobile station UE from the Idle mode (Idle state) to the Connected mode (Active state) in step S101, the mobile management node MME determines whether the mobile station UE is a roaming mobile station UE in step S102.

In the case of "YES", the present operation proceeds to step S103. In the case of "NO", the present operation proceeds to step S104.

In step S103, the mobile management node MME transmits, to the radio base station eNB, "User Consent Indication" indicating that the mobile station UE has not given consent for implementation of MDT.

As a result, the radio base station eNB does not instruct the mobile station UE to perform MDT.

On the other hand, in step S104, the mobile management node MME transmits "User Consent Indication" for notifying the radio base station eNB of "User Consent Status" related to the mobile station UE managed by the mobile management node MME.

Based on the mobile communication system according to the first embodiment of the present invention, the mobile management node MME is configured to transmit, to the radio base station eNB, "User Consent Indication" indicating that a roaming mobile station UE has not given consent for implementation of MDT, in the Attach procedure of the mobile station UE or the transition procedure to the Connected mode. Thus, it is possible to avoid a situation in which the radio base station eNB instructs the roaming mobile station UE having moved to an area to be measured of "Management Based MDT" to perform MDT.

### (Mobile communication system according to second embodiment of the present invention)

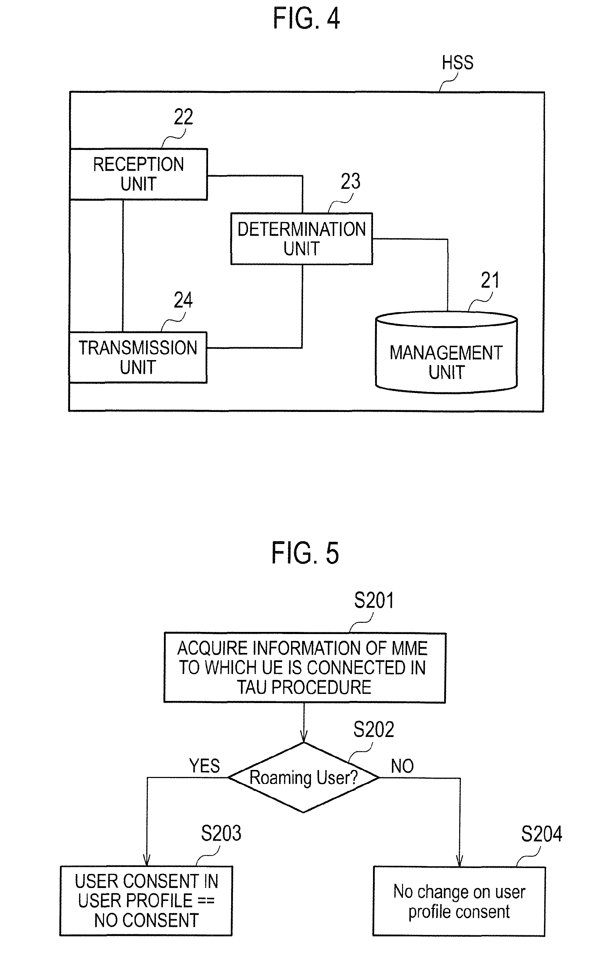

The mobile communication system according to a second embodiment of the present invention will be described with reference to Figs. 4 and 5. Hereinafter, the mobile communication system according to the second embodiment of the present invention will be described on the basis of a difference from the mobile communication system according to the second embodiment described above.

The subscriber management server HSS according to the present embodiment is installed in "Home PLMN (Public Land Mobile Network)" of the mobile station UE, and the mobile station UE is configured to constantly connect to the subscriber management server HSS.

In addition, the subscriber management server HSS according to the present embodiment includes a management unit 21, a reception unit 22, a determination unit 23, and a transmission unit 24 as illustrated in Fig. 4.

The management unit 21 is configured to manage "User Profile" of the mobile station UE for a user of the network (PLMN) to which the subscriber management server HSS belongs.

Here, the management unit 21 is configured to manage, as the "User Profile", "User Consent Status" indicating whether the mobile station UE has given consent for implementation of MDT.

The reception unit 22 is configured to receive various signals from the mobile management node MME to which the mobile station UE is connected.

For example, the reception unit 22 is configured to receive, in a TAU (Tracking Area Update) procedure of the mobile station UE, a TAU signal from the mobile management node MME (Visited MME) to which the mobile station UE is connected.

The determination unit 23 is configured to determine, in the TAU procedure of the mobile station UE, whether the mobile station UE is in a roaming state on the basis of information (for example, MME-ID) related to the mobile management node MME to which the mobile station UE is connected.

The transmission unit 24 is configured to transmit various signals to the mobile management node MME to which the mobile station UE is connected.

Here, when the determination unit 23 determines that the mobile station UE is in a roaming state, the transmission unit 24 is configured to transmit, to the mobile management node MME to which the mobile station UE is connected, "User Consent Indication" indicating that the mobile station UE has not given consent for implementation of MDT.

On the other hand, when the determination unit 23 determines that the mobile station UE is not in a roaming state, the transmission unit 24 is configured not to transmit "User Consent Indication" for notifying the mobile management node MME to which the mobile station UE is connected, of "User Consent Status" related to the mobile station UE managed by the management unit 11.

Hereinafter, an example of an operation of the subscriber management server HSS according to the second embodiment of the present invention will be described with reference to Fig. 5.

As illustrated in Fig. 5, in step S201, in the TAU procedure of the mobile station UE, the subscriber management server HSS installed in "Home PLMN" of the mobile station UE acquires information related to the mobile management node MME to which the mobile station UE is connected.

In step S202, the subscriber management server HSS determines whether the mobile station UE is in a roaming state on the basis of the information related to the mobile management node MME to which the mobile station UE is connected.

In the case of "Yes", the present operation proceeds to step S203. In the case of "No", the present operation proceeds to step S204.

In step S203, the subscriber management server HSS transmits, to the mobile management node MME to which the mobile station UE is connected, "User Consent Indication" indicating that the mobile station UE has not given consent for implementation of MDT.

As a result, the mobile management node MME to which the mobile station UE is connected sets the "User Consent Status" related to the mobile station UE so as to indicate that consent has not been given for implementation of MDT.

Therefore, the mobile management node MME to which the mobile station UE is connected does not instruct the mobile station UE to perform MDT.

On the other hand, in step S204, the subscriber management server HSS does not transmit "User Consent Indication" to the mobile management node MME to which the mobile station UE is connected.

As a result, the mobile management node MME to which the mobile station UE is connected does not change the "User Consent Status" related to the mobile station UE.

Based on the mobile communication system according to the second embodiment of the present invention, the subscriber management server HSS is configured to transmit, to the mobile management node MME to which the mobile station UE is connected, "User Consent Indication" indicating that a roaming mobile station UE has not given consent for implementation of MDT in the TAU procedure of the mobile station UE. Thus, it is possible to avoid a situation in which the mobile management node MME to which the mobile station UE is connected, instructs the roaming mobile station UE having moved into the area to be measured of "Management Based MDT" to perform MDT.

The characteristics of the present embodiment as described above may be expressed as follows:

A first characteristic of the present embodiment is a mobile communication method, and a gist thereof is to include: a step of determining, by a mobile management node MME, whether a mobile station UE is a roaming mobile station UE (Roaming User), in an Attach procedure of the mobile station UE or a transition procedure to an Active state and a step of transmitting, by the mobile management node MME, to a radio base station eNB, "User Consent Indication (a consent status indication signal)" indicating that the mobile station UE has not given consent for implementation of MDT (Minimisation of drive tests) when it is determined that the mobile station UE is a roaming mobile station UE.

In the first characteristic of the present embodiment, the mobile communication method may further include: a step of managing, by the mobile management node MME, "User Consent Status (consent status)" indicating whether a non-roaming mobile station has given consent for implementation of MDT; and a step of transmitting, by the mobile management node MME, "User Consent Indication" for notifying the radio base station eNB of "User Consent Status" related to the mobile station UE managed by the mobile management node MME when it is determined that the mobile station UE is not a roaming mobile station UE.

A second characteristic of the present embodiment is a mobile management node MME, and a gist thereof is to include: a determination unit 13 configured to determine whether a mobile station UE is a roaming mobile station UE, in an Attach procedure of the mobile station UE or the transition procedure to an Active status; and a transmission unit 14 configured to transmit, to a radio base station eNB, "User Consent Indication" indicating that the mobile station UE has not given consent for implementation of MDT when the determination unit 13 determines that the mobile station UE is a roaming mobile station UE.

In the second characteristic of the present embodiment, the mobile management node MME may further include a management unit 11 configured to manage "User Consent Status" indicating whether a non-roaming mobile station UE has given consent for implementation of MDT, and the transmission unit 14 may be configured to transmit "User Consent Indication" for notifying the radio base station eNB of "User Consent Status" related to the mobile station UE managed by the management unit 11 when the determination unit 13 determines that the mobile station UE is not a roaming mobile station UE.

A third characteristic of the present embodiment is a mobile communication method, and a gist thereof is to include: a step of determining, by a subscriber management server HSS of "Home PLMN (home network)" of a mobile station UE, whether the mobile station UE is in a roaming state, in a TAU procedure (Tracking Area Update procedure) of the mobile station UE; and a step of transmitting, by the subscriber management server HSS, to a mobile management node MME to which the mobile station UE is connected, "User Consent Indication" indicating that the mobile station UE has not given consent for implementation of MDT when the subscriber management server HSS determines that the mobile station UE is in a roaming state.

A fourth characteristic of the present embodiment is a subscriber management server HSS in "Home PLMN" of a mobile station UE, and a gist thereof is to include: a determination unit 23 configured to determine whether the mobile station UE is in a roaming state, in the TAU procedure of the mobile station UE; and a transmission unit 24 configured to transmit, to a mobile management node MME to which the mobile station UE is connected, "User Consent Indication" indicating that the mobile station UE has not given consent for implementation of MDT when it is determined that the mobile station UE is in a roaming state.

In addition, the operation of the above-mentioned the mobile management node MME or the radio base station eNB or the mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the mobile management node MME or the radio base station eNB or the mobile station UE. Furthermore, such a storage medium and processor may be arranged in the mobile management node MME or the radio base station eNB or the mobile station UE as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

In addition, the entire content of Japanese Patent Application No. 2011-102248 (filed on April 28, 2011) is incorporated in the present specification by reference.

### [Industrial Applicability]

As described above, according to the present invention, it is possible to provide a mobile communication method, a mobile management node, and a subscriber management server capable of performing control such that a roaming mobile station UE is not instructed to perform MDT.

### [Reference Signs List]

- UE: mobile station
- eNB: radio base station
- MME: mobile management node
- HSS: subscriber management server
- 11, 21: management unit
- 12, 22: reception unit
- 13, 23: determination unit
- 14, 24: transmission unit

## Claims

1. A mobile communication method, comprising:
a step of determining, by a mobile management node, whether a mobile station is a roaming mobile station, in an Attach procedure of the mobile station or a transition procedure to an Active state; and
a step of transmitting, by the mobile management node, to a radio base station, a consent status indication signal indicating that the mobile station has not given consent for implementation of drive tests when it is determined that the mobile station is a roaming mobile station.

2. The mobile communication method according to claim 1, comprising:
a step of managing, by the mobile management node, a consent status indicating whether a non-roaming mobile station has given consent for the implementation of drive tests; and
a step of transmitting, by the mobile management node, the consent status indication signal for notifying the radio base station of a consent status related to the mobile station managed by the mobile management node when it is determined that the mobile station is not a roaming mobile station.

3. A mobile management node, comprising:
a determination unit configured to determine, in the Attach procedure of the mobile station or the transition procedure to the Active state, whether the mobile station is a roaming mobile station; and
a transmission unit configured to transmit, to the radio base station, a consent status indication signal indicating that the mobile station has not given consent for the implementation of drive tests when the determination unit determines that the mobile station is a roaming mobile station.

4. The mobile management node according to claim 3, comprising:
a management unit that manages a consent status indicating whether a non-roaming mobile station has given consent for implementation of drive tests, wherein
the transmission unit is configured to transmit the consent status indication signal for notifying the radio base station of the consent status related to the mobile station managed by the management unit when the determination unit determines that the mobile station is not a roaming mobile station.

5. A mobile communication method, comprising:
a step of determining, by a subscriber management server in a home network of the mobile station, in a tracking area update procedure of the mobile station, whether the mobile station is in a roaming state; and
a step of transmitting, by the subscriber management server, to a mobile management node to which the mobile station is connected, a consent status indication signal indicating that the mobile station has not given consent for implementation of drive tests when the subscriber management server determines that the mobile station is in a roaming state.

6. The subscriber management server in the home network of the mobile station, comprising:
a determination unit that determines, in a tracking area update procedure of the mobile station, whether the mobile station is in a roaming state; and
a transmission unit that transmits, to a mobile management node to which the mobile station is connected, the consent status indication signal indicating that the mobile station has not given consent for implementation of drive tests when it is determined that the mobile station is in a roaming state.
